# EUROPÄISCHE PATENTSCHRIFT

(11) **EP 0 464 659 B1**
(45) Veröffentlichungstag und Bekanntmachung des Hinweises auf die Patenterteilung: **05.06.1996**
(21) Anmeldenummer: 91110625.0
(22) Anmeldetag: 27.06.1991
(51) Int. Cl.: B29C 65/00, B29C 53/20, B29C 33/04, B29L 23/22

(54) **Vorrichtung zur Regenerierung der Form von Kunststoffleitungen, die von einem Wickel abgewickelt sind.**
Apparatus for regeneration of the shape of plastic pipes which are unwound from a drum.
Appareil pour restaurer la forme originelle de tubes en matière plastique qui sont déroulés d'un tambour.

(30) Priorität: 29.06.1990 DE 4020697
(43) Veröffentlichungstag der Anmeldung: 08.01.1992
(73) Patentinhaber: Jeschke, Immanuel, D-31157 Sarstedt (DE)
(72) Erfinder: Jeschke, Immanuel, D-31157 Sarstedt (DE)
(74) Vertreter: Junius, Walther, Dr.

(56) Entgegenhaltungen:
- EP-A- 0 284 834
- WO-A-90/00112
- DE-A- 1 704 206
- DE-C- 717 959
- FR-A- 2 159 231
- FR-A- 2 572 993
- GB-A- 1 185 884
- GB-A- 1 401 591
- GB-A- 1 569 089
- US-A- 3 230 980
- US-A- 3 552 265
- US-A- 3 579 786
- US-A- 4 437 453
- PATENT ABSTRACTS OF JAPAN vol. 008, no. 002 (M-266)7. Januar 1984 & JP-A-58 167 116 (DAINICHI NIPPON DENSEN KK) 3. Oktober 1983
- PATENT ABSTRACTS OF JAPAN vol. 10, no. 326 (M-532)(2382) & JP-A-61 132 322 (TAKIRON)

## Beschreibung

Die Erfindung betrifft eine Vorrichtung zur Regenerierung der Form von Kunststoffleitungen, die von einem Wickel abgewickelt sind, bestehend aus einem einen Teil der Kunststoffleitung umschließenden beheizten Formwerkzeug.

Kunststoffrohre, die für Gas- und Wassertransportleitungen verwendet werden, werden teils in Form von geraden Stangen, teils im Wickel an die Baustellen angeliefert und dort miteinander verschweißt. In Stangenform haben die Leitungsstücke eine Länge, die durch die zugelassene Länge der Transportfahrzeuge begrenzt ist. Erheblich länger sind diejenigen Leitungsstücke, die nach ihrer, Herstellung auf einer Trommel zu einem Wickel gewickelt wurden. Wegen dieser höheren Leitungsstücklänge werden diese im Wickel angelieferten Kunststoffrohrleitungen verlegt, da die Leitung dann eine erheblich geringere Anzahl von Schweißstellen aufweist, obwohl die Verlegung von vom Wickel abgewickelter Rohrleitungen ebenfalls ihre Probleme aufweist.

Wird eine Kunststoffrohrleitung zu einem Wickel aufgewickelt, so wird die Form dieser Leitung erheblich deformiert, was sich nach dem Abwickeln noch in erheblichem Maße als störend bemerkbar macht. Und zwar wird ein vor dem Aufwickeln kreisrunder Querschnitt beim Aufwickeln zu einem ovalen Querschnitt deformiert, die Länge der Leitung wird an Stellen mit dem größeren Radius gedehnt, an Orten mit dem kleineren Radius gestaucht. Diese Verformungen sind nicht rein elastische Verformungen, die nach dem Abwickeln wieder vollständig verschwinden, sondern sind zum Teil plastische Verformungen, die überhaupt nicht oder nur nach sehr langen Erholungszeiten teilweise wieder verschwinden. Denn das Kunststoffmaterial, aus dem die für den Transport von Gas und Wasser benutzten Rohrleitungen gefertigt sind, weist zwar ein gewisses Formgedächtnis auf, dieses arbeitet jedoch nur sehr langsam.

Um von Wickeln abgewickelte Kunststoffrohrleitungen an ihren Enden trotz der vorhandenen Deformationen zu verschweißen, hat man mechanische Kalibriervorrichtungen entwickelt, die an den Leitungsenden angesetzt werden und das Leitungsende in die kreisrunde Form zurückdrücken, in der die Leitung ursprünglich hergestellt war. Trotz der Anwendung derartiger an den Leitungsenden angebrachter Kalibriervorrichtungen schweißt man zwei von je einem Wickel abgewickelte Kunststoffleitungen nicht direkt zusammen, sondern man schweißt an jedes Kunststoffleitungsende, das von einem Wickel abgewickelt wurde, ein Stück Stangenmaterial an und verbindet dann die beiden aufgeschweißten Enden aus Stangenmaterial durch eine weitere Schweißung miteinander. Auf diese Weise sind für das Zusammenschweißen zweier vom Wickel abgewickelter Rohrleitungen drei Schweißstellen notwendig.

Diesen erheblichen Aufwand will die vorliegende Erfindung vermeiden. Gleichzeitig will die Erfindung die erheblichen, an der Schweißstelle auftretenden Spannungen vermeiden, die nach Entfernung der mechanischen Kalibriervorrichtung auftreten, weil das vom Wickel abgewickelte Ende der Kunststoffrohrleitung sich wieder in die Form zurückzustellen bestrebt ist, die sie während der Lage im Wickel gehabt hat.

Das Problem, von einem Wickel abgewickelte Kunststoffrohre wieder in eine gerade Form zu bringen, wird bei der GB-A-1 401 591 durch eine Heiz- und Kühlvorrichtung gelöst, durch die das abgewickelte Kunststoffrohr hindurchgeführt wird. Dieses abgewickelte Kunststoffrohr wird durch ein geradliniges Formwerkzeug in Form eines Rohres geführt, welches zuerst von einem Heizblock, dann von einem Kühlblock umgeben ist, welche durch eine isolierende Scheibe voneinander getrennt sind. Diese Vorrichtung nach der GB-A-1 401 591 dient dazu, Rohre vor dem Vorgang des Ablängens in eine gerade Form zu bringen. Daher können Anwärmvorrichtung und Kühlvorrichtung hintereinander angeordnet sein.

Um zwei Kunststoffrohre zusammenzuschweißen, ist es aus der EP-A-0 284 834 bekannt geworden, ein axial geteiltes Schweißwerkzeug zu verwenden, welches aus einem äußeren und einem inneren Mantel besteht, zwischen die Heißluft eingepreßt wird. Der innere Mantel ist mit in Umfangsrichtung verlaufenden Rippen versehen. Die Heißlufteinlässe und -auslässe sind dicht nebeneinander angeordnet, um eine möglichst gleichmäßige Temperaturverteilung am Umfang zu erreichen. Zwischen Heißlufteinlaß und -auslaß bildet sich aber immer ein kälterer Bereich aus, so daß die erzielte Schweißnaht keine einheitliche Struktur längs des Umfanges des Rohres aufweisen kann.

Daher versucht die WO-A-90 00112 die Aufheizung für das Verschweißen von Rohrenden durch elektrische Heizpatronen zu erreichen.

Für das Stumpfschweißen von Kunststoffrohren wendet die DE-A-17 04 206 einen Heizspiegel an, welcher Kanäle für das Heizmedium aufweist, die ebenfalls in Umfangsrichtung verlaufen, bei denen jedoch mehrere Heizkanäle in einer senkrecht zur Achsrichtung verlaufenden Ebene angeordnet sind, in denen das Heizmedium hin- und zurückfließt. Dieser Heizspiegel wird an die Stirnseiten des Kunststoffrohres angepreßt, bis die Stirnseite so weit erhitzt ist, daß sie nach Entfernen des Spiegels mit der Stirnseite des anderen zu verschweißenden Rohres durch Zusammenpressen verschweißt werden kann.

Alle diese genannten Schweißvorrichtungen würden sich nicht eignen, um vor dem Verschweißen ein von einem Wickel abgewickelten Kunststoffrohr die für den Schweißvorgang notwendige exakt geradlinig verlaufende Form zu geben.

Die Erfindung vermeidet die Nachteile des Standes der Technik. Es ist die Aufgabe der Erfindung, eine einfach aufgebaute Vorrichtung zu schaffen, mit der vom Wickel abgewickelte Kunststoffrohrleitungen derart hergerichtet werden können, daß sie mit ihren Stirnseiten ohne das Auftreten von Verspannungen direkt miteinander verschweißbar sind.

Die erfindungsgemäße Vorrichtung zeichnet sich dadurch aus, daß das Formwerkzeug einen Außenmantel und einen Innenmantel aufweist, axial geteilt ist und eine zwischen den Mänteln angeordnete mit achsparallelen Kanälen ausgestattete Heiz- und Kühlvorrichtung aufweist.

Mit diesem Formwerkzeug wird das Ende der Kunststoffleitung in kaltem Zustand umschlossen und in diejenige Form gebracht, die das umschlossene Leitungsstück vor dem Aufwickeln gehabt hatte. Durch das Aufheizen der Form wird Wärme in das umschlossene Leitungsstück eingebracht, die die Arbeit des Formgedächtnisses wesentlich unterstützt und so das umschlossene Leitungsstück sehr schnell in die ursprüngliche Form zurückbringt, die durch die Abkühlung fixiert wird.

Bei einer vorteilhaften Ausführungsform ist die Heiz- und Kühlvorrichtung durch ein zwischen den Mänteln angeordnetes Kanalsystem und im Außenmantel und/oder in den Stirnseiten der Form angeordnete Ein- und Auslässe für das Heiz- und das Kühlmedium gebildet. Bei dieser Vorrichtung läßt man Heißluft oder Dampf in das Kühlsystem ein und wechselt dieses Heizmedium nach einer gewissen Zeit gegen das Kühlmedium, meistens einfache Luft, aus.

Bei einer anderen zweckmäßigen Ausführungsform ist die Heiz- und Kühlvorrichtung durch zwischen den Mänteln angeordnete elektrische Heizelemente und Kanäle für ein Kühlmedium gebildet.

Zweckmäßigerweise wird die doppelmantelige Form durch zwei doppelwandige Schalen gebildet. Zweckmäßig ist es, wenn jede doppelwandige Schale des Formwerkzeuges aus einem inneren, mit Außenrippen versehenen Mantel und einem mit diesem verbundenen Außenmantel aufgebaut ist, zwischen denen vorzugsweise eine wärmeisolierende Schicht angeordnet ist. Die Außenrippen dienen hier zur Bildung der Kanäle, in denen das Heiz- und Kühlmedium strömt. Durch die Isolierung, die zwischen den Oberkanten der Rippen und dem Außenmantel eingeklemmt ist, wird eine gute Abdichtung der Kanäle gegeneinander erreicht.

Vorteilhaft ist es, wenn die Kanäle zickzackförmig angeordnet sind und vorzugsweise mindestens einen Ort der Umkehrung der Strömungsrichtung um 180° aufweisen.

Um die Wärmezufuhr in den Innenmantel zu vergleichmäßigen, kann es zweckmäßig sein, wenn zumindest in einem Teil der Kanäle das betreffende Kanalstück unterteilende Rippen vorgesehen sind, deren Anzahl vorzugsweise mit der Entfernung von Einlaß für das Heiz- bzw. Kühlmedium in den Kanal größer wird. Die Flächen der Rippen nehmen ja ebenso wie die den inneren Mantel bildenden Flächen Wärme auf, die, weil sie durch die Isolierung nicht an den Außenmantel abgeleitet werden kann, zum Innenmantel geleitet wird. Da die Temperatur des Heizmediums im Kanal umso niedriger wird, je weiter es sich von der Einlaßstelle entfernt hat, kann der Temperaturabfall des Heizmediums durch zusätzliche Rippen, die Wärme aufnehmen und an den Innenmantel weiterleiten, eine Kompensation derart erfolgen, daß der Innenmantel über seine gesamte Fläche eine nahezu völlig gleichmäßige Temperatur aufweist.

Zur Erzielung dieser gleichmäßigen Temperatur kann es auch zweckmäßig sein, wenn Ein- und Auslaß des Heizmediums dicht nebeneinander angeordnet sind und die Kanalteile parallel zueinander verlaufen, wobei vorzugsweise am Außenmantel Verbinder für die Kanalteile vorgesehen sind, die in einem System hintereinandergeschalteter Kanalteile diese miteinander unter Überspringung jeweils eines Kanalteiles verbinden. Auf diese Weise wird es möglich, jeweils zwei Kanalteile so nebeneinander parallel anzuordnen, daß das Heiz- bzw. Kühlmedium benachbarter Kanäle eine gleiche Abweichung nach oben und nach unten von der Mitteltemperatur haben, die sich aus der Mittelwertbildung von Eingangs- und Ausgangstemperatur ergibt.

Die erfindungsgemäße Vorrichtung ist mit Spannvorrichtungen zum Zusammendrücken der Schalen des Formwerkzeuges an den Teilungsstellen bzw. Teilungsebenen versehen. Diese Spannvorrichtungen können einfache mechanische Spannvorrichtungen, aber auch hydraulische Spannvorrichtungen sein.

Zweckmäßig ist es, für den Außenmantel noch eine Außenisolierung vorzusehen.

Das Wesen der Erfindung ist nachstehend anhand von in der Zeichnung schematisch dargestellten Ausführungsbeispielen näher erläutert. Es zeigen:

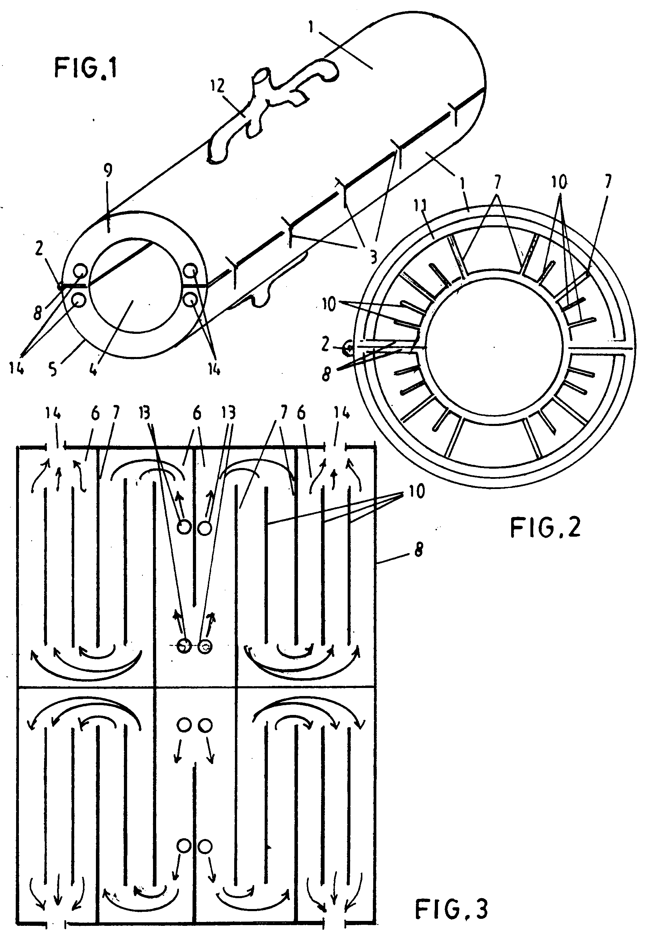

- Fig. 1: eine perspektivische Ansicht einer Vorrichtung zur Regenerierung;
- Fig. 2: (vergrößert) einen Querschnitt durch diese Vorrichtung;
- Fig. 3: ein Schema der Kanalanordnung,
- Fig. 4: eine perspektivische Ansicht einer anderen Vorrichtung,
- Fig. 5: die Kanalanordnung dieser Vorrichtung,
- Fig. 6: eine perspektivische Kanalansicht einer weiteren Vorrichtung,
- Fig. 7: deren Kanalanordnung.

Das Formwerkzeug für die Regenerierung besteht aus zwei Halbschalen 1, die auf einer Seite durch ein Scharnier 2, auf der anderen Seite durch Spannvorrichtungen 3 miteinander verbunden sind. Jede Halbschale weist einen Innenmantel 4 und einen Außenmantel 5 auf. Zwischen diesen beiden Mänteln 4, 5 befinden sich Kanäle 6, die durch Trennwände 7 voneinander getrennt sind und in den Teilungsebenen Wände 8 aufweisen. Die Stirnseitenwände sind mit 9 bezeichnet. Im Inneren der Kanäle 6 befinden sich auf dem Innenmantel Rippen 10. Diese können niedriger sein als die Trennwände 7, die bei einer Betrachtung des Innenmantels 4 ebenfalls wie Rippen erscheinen. Zwischen dem Außenmantel 5 und dem Innenmantel 4 ist eine am Außenmantel 5 innen anliegende Isolierung 11 angebracht, welche auf der Oberkante der Trennwände 7 des Innenmantels 4 aufliegt. Diese Isolierung 11 dient dazu, den Außenmantel nicht zu heiß werden zu lassen, da dieser von den Monteuren eventuell angefaßt wird.

Das Heiz- bzw. Kühlmedium wird durch Verteilerrohre 12 den Einlaßöffnungen 13 zugeführt. In den Stirnseitenwänden 9 sind Auslaßöffnungen 14 vorgesehen.

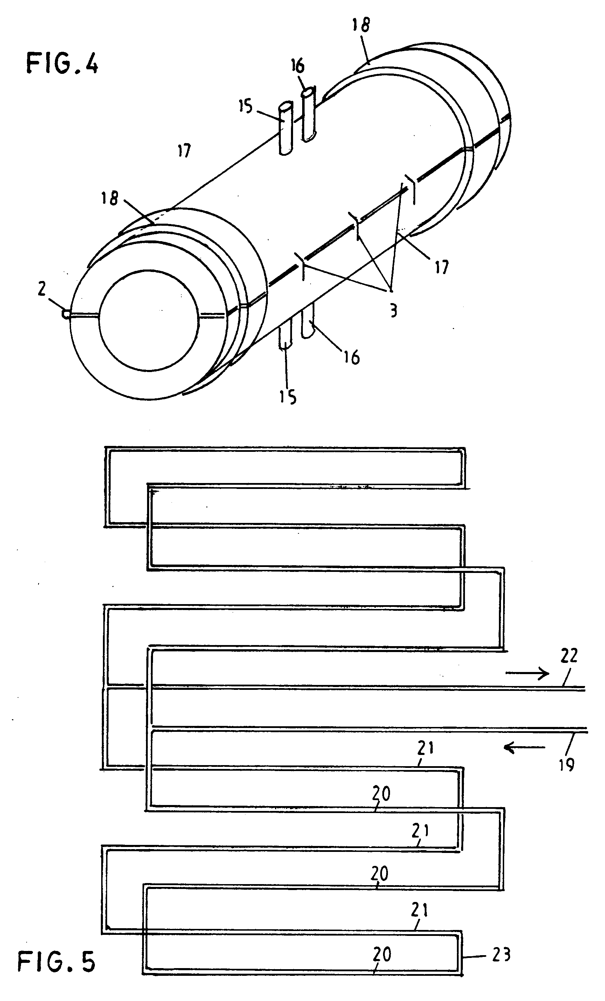

Im Ausführungsbeispiel der Figuren 4 und 5 ist die Vorrichtung ebenfalls aus zwei Halbschalen 1 aufgebaut, die mittig einen Einlaß 15 und einen Auslaß 16 für das Heiz- und Kühlmedium aufweisen. Zwischen dem Innenmantel 4 und dem Außenmantel 5 ist ein System von Rohrleitungen angeordnet, die dicht parallel nebeneinander angeordnet sind, wobei am Außenmantel isolierende Schalen 17 angeordnet sind, die die Rohrverbinder 18 abdecken, die aus dem Außenmantel heraustreten. Diese Rohrverbinder 18 verbinden jeweils zwei parallele Rohre miteinander, zwischen denen sich ein weiteres Rohr befindet. Auf diese Weise entsteht eine Rohr- bzw. Kanalanordnung in Form eines Systems hintereinandergeschalteter Kanalteile, die miteinander unter Überspringen jeweils eines Kanalteiles miteinander verbunden sind. An das Einlaufrohr 19 schließt sich zu beiden Seiten ein Rohrverbinder 18 an, der zum Rohr 20 führt und das Rohr 21 überspringt, welches zur Rücklaufleitung 22 führt. Auf diese Weise wird immer zwischen zwei hintereinandergeschalteten Rohren der Einlaufleitung ein Rohr der Rücklaufleitung geschaltet bzw. zwischen zwei Rohren der Rücklaufleitung wird ein Rohr der Einlaufleitung geschaltet. Auf diese Weise entsteht zwischen den Rohren ein Bereich mit einer Mitteltemperatur, wie sie sich sonst an den Umlenkstellen 23 findet.

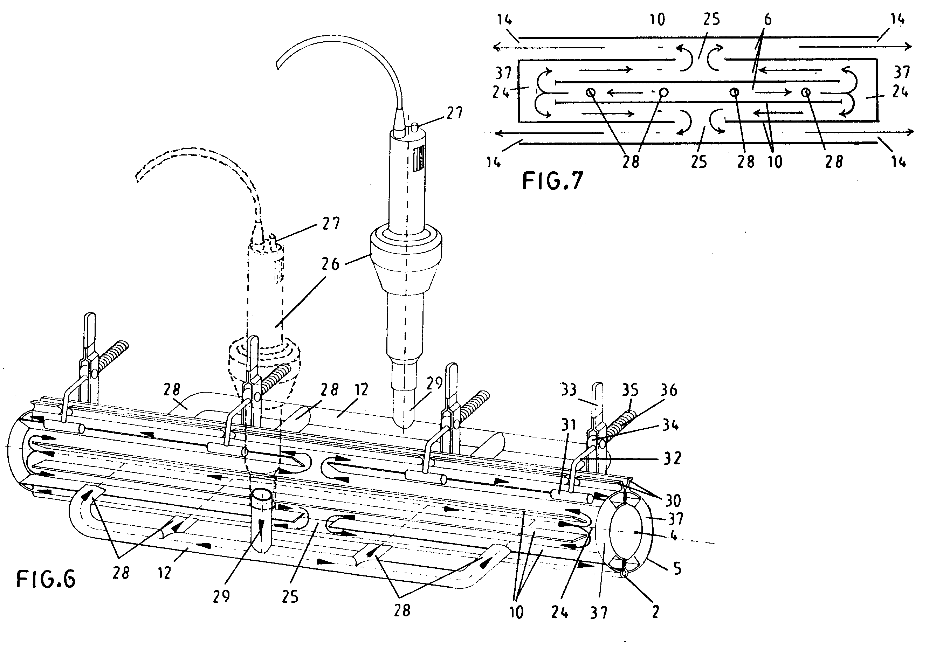

In Fig. 6 und 7 ist eine weitere Ausführungsform der Regenerationsvorrichtung gezeigt. Die beiden Halbschalen 1 sind als Strangpreßteile aus Aluminium gefertigt. Die sich vom Innenmantel 4 zum Außenmantel 5 erstreckenden Rippen 10 sind an den Unlenkstellen 24, 25 für die Heißluftströme unterbrochen. Aus den Gebläsen 26, die mit einem Schalter 27 für das Ein- und Ausschalten der Heizvorrichtung im Gebläse ausgestattet sind, und die einfach auf die Stutzen 29 aufsteckbar sind, kommende Luft wird in die Verteilerrohre 12 und von diesen in die Stutzen 28 und von dort in den mittleren Kanal 6 geleitet, von wo aus sich die Luft durch die weiteren Kanäle 6 bis zum Ausgang 14 bewegt. An den Umlenkstellen 25 treffen zwei entgegengerichtete Luftströme aufeinander, mischen sich und trennen sich wieder, um in Gegenrichtung davonzufließen. Die beiden Halbschalen 1 weisen auf der den Scharnieren 2 abgekehrten Seite muldenförmige Ansätze 30 auf, in die als Haken dienende Querstangen 31 einfallen, die an Stangen 32 befestigt sind, die sich durch einem an einem Hebel 33 verschwenkbaren Stein 34 erstrecken und durch eine zwischen dem Stein 34 und einer am Ende der Stange 32 angebrachten Scheibe 35 angebrachte Druckfeder 36 in Verschlußstellung gezogen werden.

Am einfachsten werden die Halbschalen im Strangpreßverfahren hergestellt. Nach dem Herausarbeiten eines Teiles der Innenwände am Ort der Umlenkstellen 24 werden die Stirnseiten an diesen Umlenkstellen durch Stirnwände 37 verschlossen.

## Patentansprüche

1. Vorrichtung zur Regenerierung der Form von Kunststoffleitungen, die von einem Wickel abgewickelt sind,
bestehend aus einem einen Teil der Kunststoffleitung umschließenden beheizten Formwerkzeug (1), dadurch gekennzeichnet,
daß das Formwerkzeug einen Außenmantel (5) und einen Innenmantel (4) aufweist, axial geteilt ist und eine zwischen den Mänteln (4,5) angeordnete mit achsparallelen Kanälen ausgestattete Heiz- und Kühlvorrichtung aufweist.

2. Vorrichtung nach Anspruch 1
dadurch gekennzeichnet,
daß die Heiz- und Kühlvorrichtung durch ein zwischen den Mänteln angeordnetes System von Kanälen (6) und im Außenmantel (5) und/oder in den Stirnseiten (9) des Formwerkzeuges (1) angeordnete Ein- (13) und Auslässe (14), für das Heiz- und das Kühlmedium gebildet ist.

3. Vorrichtung nach Anspruch 1,
dadurch gekennzeichnet,
daß die Heiz- und Kühlvorrichtung durch zwischen den Mänteln (4, 5) angeordnete elektrische Heizelemente und Kanäle (6) für ein Kühlmedium gebildet ist.

4. Vorrichtung nach Anspruch 1,
dadurch gekennzeichnet,
daß jede doppelwandige Schale (1) des Formwerkzeuges aus einem inneren, mit Außenrippen (7, 10) versehenen Mantel und einem mit diesem verbundenen Außenmantel (5) aufgebaut ist, zwischen denen vorzugsweise eine wärmeisolierende Schicht (11) angeordnet ist.

5. Vorrichtung nach Anspruch 1,
dadurch gekennzeichnet,
daß die Kanäle (6) zickzackförmig angeordnet sind und Vorzugsweise mindestens einen Ort der Umkehrung der Strömungsrichtung um 180° aufweisen.

6. Vorrichtung nach Anspruch 1,
dadurch gekennzeichnet,
daß zumindest in einem Teil der Kanäle (6), vorzugsweise an dem Innenmantel (4) das betreffende Kanalstück unterteilende Rippen (10) oder Vorsprünge vorgesehen sind, deren Anzahl vorzugsweise mit der Entfernung vom Kanaleinlaß (13) größer wird.

7. Vorrichtung nach Anspruch 1,
dadurch gekennzeichnet,
daß Ein- (15) und Auslaß des Heizmediums dicht nebeneinander angeordnet sind und die Kanalteile parallel zueinander verlaufen, wobei vorzugsweise im Außenmantel (5) Verbinder (18) für die Kanalteile vorgesehen sind, die in einem System hintereinandergeschalteter Kanalteile diese miteinander unter Überspringen jeweils eines Kanalteiles verbinden.

8. Vorrichtung nach Anspruch 1,
gekennzeichnet durch
Spannvorrichtungen (3) zum Zusammendrücken der Schalen (1) des Formwerkzeuges an den Teilungsstellen oder Teilungsebenen.

9. Vorrichtung nach Anspruch 1,
gekennzeichnet durch
eine Außenisolierung des Außenmantels (5) und/oder der Verteilerrohre (12).

10. Vorrichtung nach Anspruch 8,
dadurch gekennzeichnet,
daß die Spannvorrichtungen nach Art eines Kniehebels ausgebildet sind und vorzugsweise einen Hebel (33) mit einem verschwenkbaren Stein (34) aufweisen, der von einer am einen Ende einen Haken (31) tragenden Stange (32) durchsetzt ist, die von einer Feder (36) unter Spannung gehalten ist.

11. Vorrichtung nach Anspruch 1,
dadurch gekennzeichnet,
daß die Halbschalen (1) im Strangpreßverfahren hergestellt sind, und daß ein Teil der Kanäle (6) in ihrem Inneren an den Stirnseiten der Halbschalen durch angebrachte Stirnwandteile verschlossen sind.

12. Vorrichtung nach Anspruch 1,
dadurch gekennzeichnet,
daß an den Verteilerrohren (12) senkrecht zu deren Achsen und senkrecht zu der von den Verteilerrohrachsen und der Achse der Halbschalen (1) gebildeten Ebene Stutzen (29) angeordnet sind, auf die Auslaßrohre von Gebläsen (26) aufsteckbar sind.

## Claims

1. Apparatus for regeneration of the shape of plastic pipes which are unwound from a drum, consisting of a heated shaping tool (1) enclosing a part of the plastic pipe, characterised in that the shaping tool exhibits an outer casing (5) and a inner casing (4), is divided axially and exhibits a heating and cooling device which is disposed between the casings (4, 5) and equipped with axially parallel passages.

2. Apparatus according to claim 1, characterised in that the heating and cooling device is formed by a system of passages (6) disposed between the casings, and inlets (13) and outlets (14) for the heating and the cooling medium disposed in the outer casing (5) and/or in the front ends (9) of the shaping tool (1).

3. Apparatus according to claim 1, characterised in that the heating and cooling device is formed by electrical heating elements and passages (6) for a cooling medium disposed between the casings (4, 5).

4. Apparatus according to claim 1, characterised in that each double-walled shell (1) of the shaping tool consists of an inner casing provided with external fins (7, 10) and an outer casing (5) connected to the latter and between which a thermally insulating layer (11) is preferably disposed.

5. Apparatus according to claim 1, characterised in that the passages (6) are disposed in a zig-zag pattern and preferably exhibit at least one location in which the direction of flow is turned through 180°.

6. Apparatus according to claim 1, characterised in that at least in a part of the passages (6), preferably on the inner casing (4), ribs (10) or projections are provided which divide the passage section in question and the number of which preferably increases with the distance from the passage inlet (13).

7. Apparatus according to claim 1, characterised in that the inlet (15) and outlet of the heating medium are located close to one another and the passage parts run parallel with one another, and connectors (18) for the passage parts are preferably provided in the outer casing (5) and in a system of passage parts connected one after the other connect these to one another while overlapping one passage part in each case.

8. Apparatus according to claim 1, characterised by clamping devices (3) for clamping together the shells (1) of the shaping tool at the dividing locations or dividing planes.

9. Apparatus according to claim 1, characterised by a external insulation for the outer casing (5) and/or the distributor pipes (12).

10. Apparatus according to claim 8, characterised in that the clamping devices take the form of a toggle lever and preferably exhibit a lever (33) with a pivotable block (34) through which passes a rod (32) which carries a hook (31) at one end and is held under tension by a spring (36).

11. Apparatus according to claim 1, characterised in that the half shells (1) are manufactured by extrusion, and in that a part of the passages (6) in their interior is closed at the front ends of the half shells by attached front wall parts.

12. Apparatus according to claim 1, characterised in that connecting stubs (29) on to which outlet pipes of blowers (26) can be connected are disposed on the distributor pipes (12) at right angles to their axes and at right angles to the plane formed by the distributor pipe axes and the axis of the half shells (1).

## Revendications

1. Dispositif pour rétablir la forme de canalisations en matière plastique, qui sont déroulées d'un rouleau,
constitué par un outil chauffé de formage (1), qui entoure une partie de la canalisation en matière plastique,
caractérisé en ce
que l'outil de formage comporte une enveloppe extérieure (5) et une enveloppe intérieure (4), est divisé axialement et comporte un dispositif de chauffage et de refroidissement, qui est disposé entre les enveloppes (4,5) et comporte des canaux parallèles à l'axe.

2. Dispositif selon la revendication 1, caractérisé en ce que le dispositif de chauffage et de refroidissement est formé par un système de canaux (6), qui est disposé entre les enveloppes, et par des entrées (13) et des sorties (14) pour le fluide de chauffage et le fluide de refroidissement, qui sont aménagées dans l'enveloppe extérieure (5) et/ou dans les faces frontales (9) de l'outil de formage (1).

3. Dispositif selon la revendication 1, caractérisé en ce que le dispositif de chauffage et de refroidissement est formé par des éléments électriques de chauffage et des canaux (6) pour un fluide de refroidissement, disposés entre les enveloppes (4,5).

4. Dispositif selon la revendication 1, caractérisé en ce que chaque coque à paroi double (1) de l'outil de formage est constituée par une enveloppe intérieure pourvue de nervures extérieures (7, 10), et par une enveloppe extérieure (5) reliée à cette enveloppe, enveloppes entre lesquelles est disposée de préférence une couche d'isolation thermique (11).

5. Dispositif selon la revendication 1, caractérisé en ce que les canaux (6) sont disposés en zig-zag et possèdent de préférence au moins un point d'inversion sur 180° de la direction d'écoulement.

6. Dispositif selon la revendication 1, caractérisé en ce qu'au moins dans une partie des canaux (6), de préférence sur l'enveloppe intérieure (4), sont prévues des nervures (10) ou des parties saillantes, qui subdivisent l'élément de canal considéré et dont le nombre augmente de préférence avec la distance par rapport à l'entrée (13) du canal.

7. Dispositif selon la revendication 1, caractérisé en ce que l'entrée (15) et la sortie du fluide de chauffage sont disposées directement côte-à-côte et les éléments de canaux sont parallèles entre eux, et de préférence dans l'enveloppe extérieure (5) sont prévus des raccords (18) pour les éléments de canaux, qui, dans un système d'éléments de canaux disposés les uns derrière les autres, relient ces canaux entre eux en sautant respectivement un élément de canal.

8. Dispositif selon la revendication 1, caractérisé par des dispositifs de serrage (3) servant à serrer l'une contre l'autre les coques (1) de l'outil de formage au niveau des zones de séparation ou des plans de séparation.

9. Dispositif selon la revendication 1, caractérisé par une isolation extérieure de l'enveloppe extérieure (5) et/ou des tubes de répartition (12).

10. Dispositif selon la revendication 8, caractérisé en ce que les dispositifs de serrage sont agencés à la manière d'un levier coudé et comportent de préférence un levier (33) possédant un bloc basculant (34), qui est traversé par une barre (32) qui porte un crochet (32) à une extrémité et qui est maintenue sous tension par un ressort (36).

11. Dispositif selon la revendication 1, caractérisé en ce que les demi-coques (1) sont fabriquées selon le procédé d'extrusion et qu'une partie des canaux (6) sont fermés en leur intérieur, au niveau des faces frontales des demi-coques, par des éléments de paroi frontaux rapportés.

12. Dispositif selon la revendication 1, caractérisé en ce que sur les tubes de répartition (12) sont disposés, perpendiculairement aux axes de ces tubes et perpendiculairement au plan formé par les axes des tubes de distribution et l'axe des demi-coques (1), des tubulures (29), sur lesquelles peuvent être emmanchés des tubes de sortie de ventilateurs (26).
